(19) 

**Europäisches Patentamt**
**European Patent Office**
**Office européen des brevets**

(11) **EP 3 855 271 B1**

(12) **EUROPEAN PATENT SPECIFICATION**

(45) Date of publication and mention
of the grant of the patent:
**07.06.2023 Bulletin 2023/23**

(21) Application number: **18938382.1**

(22) Date of filing: **31.10.2018**

(51) International Patent Classification (IPC):
**G05D 1/02** *(2020.01)*     **A01B 69/00** *(2006.01)*
**A01D 34/64** *(2006.01)*     **A01D 34/00** *(2006.01)*

(52) Cooperative Patent Classification (CPC):
**G05D 1/0217; A01D 34/008;** G05D 2201/0208

(86) International application number:
**PCT/JP2018/040527**

(87) International publication number:
**WO 2020/090039 (07.05.2020 Gazette 2020/19)**

(54) **TRAVEL ROUTE DETERMINATION DEVICE AND WORKING MACHINE**

FAHRWEGBESTIMMUNGSVORRICHTUNG UND ARBEITSMASCHINE

DISPOSITIF DE DÉTERMINATION D'ITINÉRAIRE DE DÉPLACEMENT ET ENGIN DE CHANTIER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**28.07.2021 Bulletin 2021/30**

(73) Proprietor: **HONDA MOTOR CO., LTD.**
**Minato-ku**
**Tokyo 107-8556 (JP)**

(72) Inventors:
• **MURO, Keiji**
**Wako-shi, Saitama 351-0193 (JP)**
• **KAMEYAMA, Naoki**
**Wako-shi, Saitama 351-0193 (JP)**

• **KIGAMI, Minami**
**Wako-shi, Saitama 351-0193 (JP)**
• **YAMAMURA, Makoto**
**Wako-shi, Saitama 351-0193 (JP)**

(74) Representative: **Beder, Jens**
**Mitscherlich PartmbB**
**Patent- und Rechtsanwälte**
**Sonnenstraße 33**
**80331 München (DE)**

(56) References cited:
**EP-A1- 3 238 523      EP-A2- 1 406 140
CN-A- 104 268 862      JP-A- 2016 028 311
JP-A- 2016 028 311      JP-A- 2016 186 751
US-A1- 2004 068 352      US-A1- 2018 051 991**

EP 3 855 271 B1

**Description**

TECHNICAL FIELD

The present invention relates to a traveling route determination apparatus mainly applicable to a work machine.

BACKGROUND ART

A work machine such as a lawn mower generally performs a work in a work region in order while traveling at a predetermined vehicle speed. The work region is not necessarily flat but sometimes has undulations (see PTL 1).
PTL 2 discloses a robot, program and recording medium in order to classify obstacles and non-obstacles efficiently.
PTL 3 discloses a mowing robot and a control method thereof, to provide an enhanced movement control of the mowing robot.

CITATION LIST

PATENT LITERATURE

    PTL 1: Japanese Patent Laid-Open No. 9-128043
    PTL 2: JP 2016 028311 A
    PTL 3: EP 3 238 523 A1
    PTL 4: EP 1 406 140 A2

SUMMARY OF INVENTION

TECHNICAL PROBLEM

When the work machine passes undulations in the work region, a traveling unit may slip. This sometimes makes it necessary to determine the traveling route of the work machine by taking account of the undulations in the work region.
It is an object of the present invention to determine the traveling route of the work machine by taking account of the undulations of the work region.

SOLUTION TO PROBLEM

One aspect of the present invention relates to a traveling route determination apparatus, and this traveling route determination apparatus is a traveling route determination apparatus for determining a traveling route of a work machine in a work region, characterized by comprising obtaining means for obtaining geographical information of the work region, evaluating means for evaluating a gradient distribution of the work region based on the geographical information, and determining means for determining a traveling route of the work machine from a current position to a destination in the work region based on the gradient distribution, such that an undulation in the traveling route decreases.

ADVANTAGEOUS EFFECTS OF INVENTION

According to the present invention, the traveling route of the work machine can be determined by taking account of the undulations in the work region.

BRIEF DESCRIPTION OF DRAWINGS

    Fig. 1A is a schematic view for explaining a configuration example of a work system;
    Fig. 1B is a block diagram for explaining a configuration example of the work system;
    Fig. 1C is a block diagram and a schematic view for explaining a configuration example of a work machine;
    Fig. 2A is a flowchart for explaining an example of the work mode of the work machine;
    Fig. 2B is a flowchart for explaining an example of a traveling route determination method;

Fig. 3A is a schematic view for explaining geographical information;
Fig. 3B is a view for explaining the evaluation result of a gradient distribution;
Fig. 3C is a view for explaining the moving cost between adjacent regions;
Fig. 4A is a view for explaining an example of the geographical information;
Fig. 4B is a view for explaining another example of the geographical information;
Fig. 5 is a view for explaining an example of a moving cost setting method;
Fig. 6A is a view for explaining an example of a method of virtually dividing a work region into a plurality of regions;
Fig. 6B is a view for explaining another example of the method of virtually dividing a work region; and
Fig. 6C is a view for explaining still another example of the method of virtually dividing a work region.

DESCRIPTION OF EMBODIMENTS

Embodiments of the present invention will now be described with reference to the accompanying drawings. Note that the drawings are schematic views showing structures or arrangements according to the embodiments, and the dimensions of members shown in the drawings do not necessarily reflect the actuality. In the drawings, the same reference numerals denote the same members or the same constituent elements, and a description of repetitive contents will be omitted hereinafter.

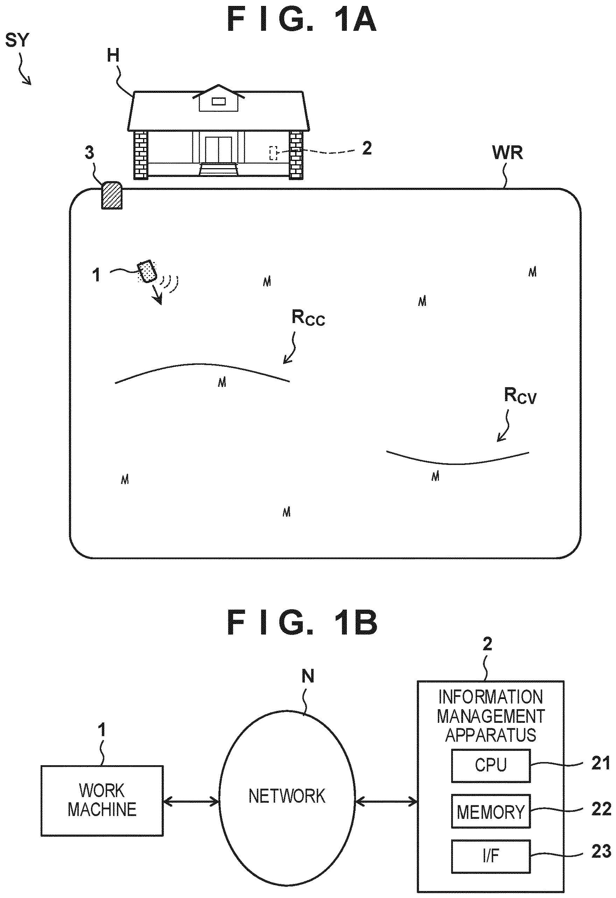

Fig. 1A is a schematic view showing the work mode of a work system SY according to an embodiment. Fig. 1B is a block diagram showing a configuration example of the work system SY. The work system SY includes a work machine (work vehicle) 1, an information management apparatus (server) 2, and a station 3. In addition to the work machine 1, the information management apparatus 2, and the station 3, Fig. 1A shows a house H of the owner of these components.

The work machine 1 performs a predetermined work in a work region WR. In this embodiment, it is assumed that the work region WR is the garden (lawn) of the house H, the work contents include a lawn mowing work, and the work machine 1 is an unmanned traveling type lawn mower. Note that other examples of the work contents are a snow removing work and a farm work (for example, a cultivation work), so the concept of the work machine 1 includes a snow remover and a farm machine (for example, a cultivator), in addition to a lawn mower.

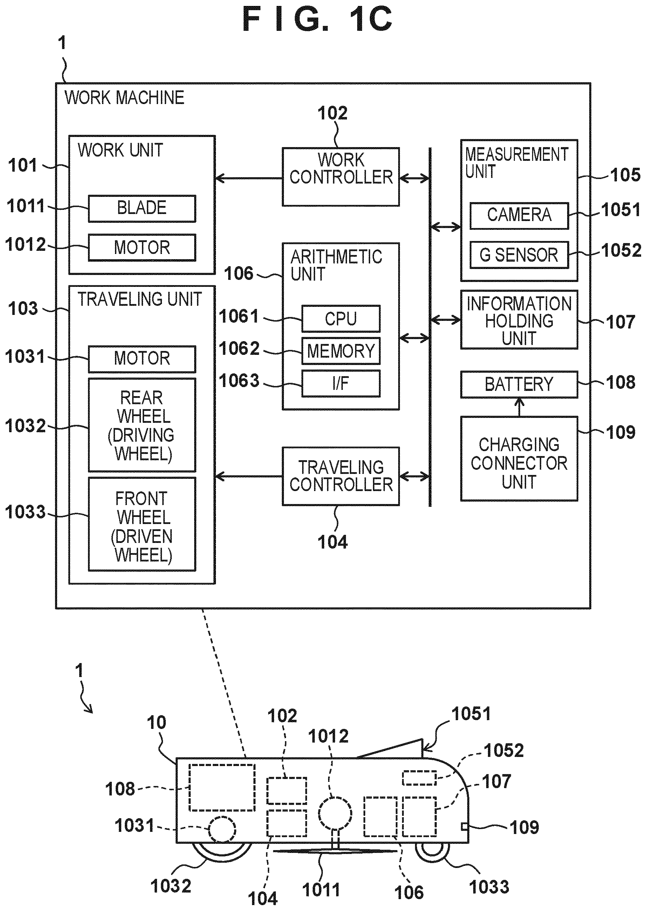

As will be described in detail later, the work region WR is not necessarily flat but generally has undulations formed by inclinations, steps, and the like. As examples of the undulations, Fig. 1 shows a mountain-like or projecting region $R_{CC}$ and a valley-like or recessed region Rev.

The work machine 1 and the information management apparatus 2 can communicate with each other across a network N. The work machine 1 performs the abovementioned work while exchanging necessary information with the information management apparatus 2. The information management apparatus 2 manages information related to the work (for example, information indicating the work situation). The information management apparatus 2 includes a central processing unit (CPU) 21, a memory 22, and an external communication interface 23. For example, the information management apparatus 2 performs information communication with the work machine 1 across the network N, and processes information received from the work machine 1 or information to be transmitted to the work machine 1. In this embodiment, the information management apparatus 2 is installed in the house H of the owner of the work region WR. As another embodiment, however, the information management apparatus 2 may also be installed in a place relatively far from the work region WR.

Note that in this embodiment, the function of the information management apparatus 2 is implemented by the CPU 21 by executing a predetermined program. As another embodiment, however, the function may also be executed by, for example, a PLD (Programmable Logic Device) or an ASIC (Application Specific Integrated Circuit). That is, the function of the information management apparatus 2 can be implemented by either software or hardware. Note that the abovementioned program is prestored in the memory 22 in this embodiment, but may also be provided via a network or a storage medium as another embodiment.

The station 3 is installed in the work region WR (for example, in the end portion of the work region WR such as the side of the house H). When not in operation, the work machine 1 is accommodated in the station 3. As will be described in detail later, the work machine 1 operates based on a built-in battery, and the station 3 can charge this battery while the work machine 1 is accommodated in the station 3. The station 3 may also be expressed as a charging station.

Fig. 1C is a block diagram showing a configuration example of the work machine 1. The work machine 1 includes a work unit 101, a work controller 102, a traveling unit 103, a traveling controller 104, a measurement unit 105, an arithmetic unit 106, an information holding unit 107, a battery 108, and a charging connector unit 109.

The work unit 101 can implement a work in the work region WR. In this embodiment, the work unit 101 includes a lawn mowing blade 1011 and a motor 1012 installed in the lower portion of a vehicle body 10 of the work machine 1. The blade 1011 is a disc-like member and mows the lawn in the work region WR by rotating by receiving power from the motor 1012. As the motor 1012, it is possible to use a well-known electric motor such as a three-phase induction motor. The work controller 102 is, for example, an electric part formed by mounting one or more electronic parts such as semiconductor ICs on a printed circuit board, and controls the driving of the work unit 101.

The traveling unit 103 is installed in the low portion of the vehicle body 10 such that the work machine 1 can travel. In this embodiment, the traveling unit 103 includes motors 1031, a pair of left and right rear wheels 1032 as driving wheels, and a pair of left and right front wheels 1033 as driven wheels. The motors 1031 are each installed for one of the pair of rear wheels 1032, and can individually drive them. Like the motor 1012, a well-known electric motor can be used as the motor 1031. For example, the motors 1031 can move the work machine 1 forward and backward and turn it (to the right or left) by adjusting the rotational directions and rotational speeds of the pair of rear wheels 1032. The traveling controller 104 is an electric part formed by mounting one or more electronic parts on a printed circuit board like the work controller 102, and controls the driving of the traveling unit 103.

The measurement unit 105 is a sensor group for obtaining information related to the operation of the work machine 1, such as the traveling state, work mode, and surrounding environment of the work machine 1. For example, the measurement unit 105 includes a camera 1051 and a G sensor 1052. The camera 1051 can obtain information (for example, the geographical features of the work region WR and the presence/absence of an obstacle) of the surroundings of the work machine 1. In this embodiment, the camera 1051 captures an image in front of the work machine 1. For example, the work machine 1 can capture images of the surroundings from the camera 1051 while changing the directions in a given position, and obtain geographical information of the work region WR based on the obtained image information and the direction of the work machine 1 in the work region WR. Note that as another embodiment, an omni-directional camera capable of capturing images around the work machine 1 can also be used as the camera 1051. The G sensor 1052 can detect the posture of the work machine 1 (for example, the inclination of the vehicle body 10 in the horizontal direction).

The measurement unit 105 can further include various sensors in addition to the camera 1051 and the G sensor 1052. For example, the measurement unit 105 can further include a GPS (Global Positioning System) sensor for obtaining information indicating the machine position in the work region WR. Furthermore, the measurement unit 105 can also include, for example, a humidity sensor, a temperature sensor, and an atmospheric pressure sensor capable of obtaining information of the surrounding environment of the work machine 1. In addition, the measurement unit 105 can further include, for example, sensors for obtaining information necessary to calculate the machine position based on the odometry method (for example, sensors for detecting the rotational speed of a wheel, the steering angle, and the like).

The arithmetic unit 106 functions as a system controller by performing arithmetic processing for controlling the whole work machine 1. In this embodiment, the arithmetic unit 106 includes a CPU 1061, a memory 1062, and an external communication interface 1063, and can exchange signals and information with the individual elements of the work machine 1 via a bus or the like. For example, the arithmetic unit 106 drives the work unit 101 by outputting a control signal to the work controller 102, or detects the load of the work unit 101 by receiving a control signal from the work controller 102. The arithmetic unit 106 can also receive a signal or information indicating a predetermined measurement result from the measurement unit 105, and perform driving control or feedback control on each element by arithmetic control based on the signal or information. As will be described in detail later, the arithmetic unit 106 can also function as a traveling route determination apparatus for determining the traveling route of the work machine 1. Note that the function of the arithmetic unit 106 can be implemented by either software and hardware, like the information management apparatus 2.

As the information holding unit 107, a nonvolatile memory, such as an EEPROM or a flash memory, or another well-known storage medium is used. As will be described in detail later, the information holding unit 107 can hold predetermined information. Also, the arithmetic unit 106 can perform arithmetic processing by reading out necessary information from the information holding unit 107, and store the result obtained by the arithmetic processing in the information holding unit 107.

A chargeable secondary battery such as a lithium-ion battery or a nickel-hydrogen battery is used as the battery 108. The charging connector unit 109 is electrically connectable to the station 3. When the charging connector unit 109 is electrically connected to the station 3, the battery 108 is charged by electric power supplied from the station 3. Note that the charging connector unit 109 is installed in the front portion of the vehicle body 10 in this embodiment, but may also be installed in the rear portion of the vehicle body 10 as another embodiment.

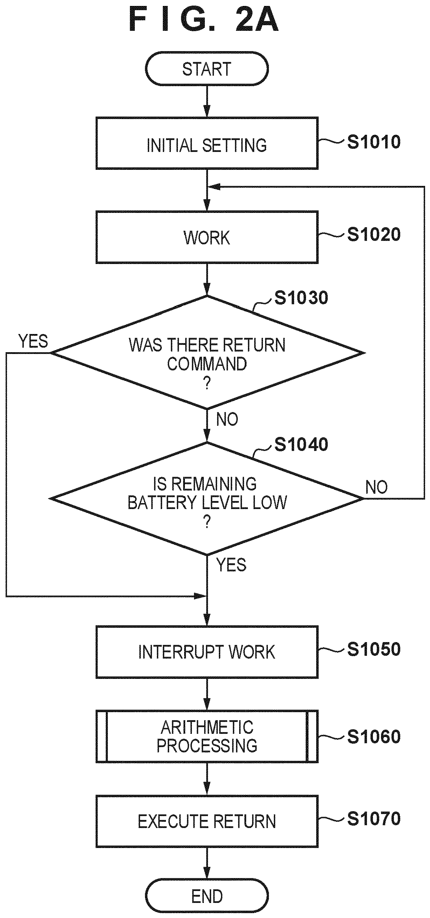

Fig. 2A is a flowchart showing an example of the work mode of the work machine 1. The work and traveling of the work machine 1 are mainly implemented by the arithmetic processing of the arithmetic unit 106 and driving control on each element of the work machine 1 based on the result of the processing. The arithmetic unit 106 principally performs the following steps. This flowchart is started when a user such as the owner inputs a work start command, and the work machine 1 is stored in the station 3 until then. Assume that this work start command is input by using the information management apparatus 2 or a portable terminal (for example, a smartphone) as a part of the information management apparatus 2, and is input at the work start set time when using a work start reservation function.

In step S1010 (to be simply referred to as "S1010" hereinafter. This applies to other steps as well), initial setting necessary to start the work is performed. In this embodiment, geographical information of the work region WR is held in the information holding unit 107 in advance, and the arithmetic unit 106 reads out this geographical information from the information holding unit 107 and makes each element of the work machine 1 drivable. As will be described in detail later, the abovementioned geographical information contains coordinate information of the work region WR in the horizontal and vertical directions. That is, this geographical information is map information containing information indicating the outer shape of the work region WR when viewed from above, and information (altitude information) in the direction of height, and can also be expressed as three-dimensional coordinate information or the like.

In S1020, the work machine 1 starts from the station 3 and makes the work unit 101 operable, thereby starting the work in the work region WR. If the user has designated a part of the work region WR where the work is to be performed, the work machine 1 goes to the designated part of the work region WR and performs the work there. In this embodiment, the work machine 1 advances the work while detecting the machine position by using the abovementioned geographical information of the work region WR. However, the work mode is not limited to this. For example, the work machine 1 can also advance the work while detecting a predetermined installed object in the work region WR as another embodiment. As one example, the work machine 1 can perform the work while detecting an electromagnetic wave from a wire defining the work region WR.

In S1030, the presence/absence of a return command is determined. The process advances to S 1050 if there is a return command, and advances to S1040 if not. The return command is input by the user by using the information management apparatus 2 or by using a portable terminal as a part of the information management apparatus 2, and is input at the work termination set time when using a work terminal reservation function.

In S1040, whether the residual amount of the battery 108 is smaller than a reference amount is determined. The process advances to S1050 if the residual amount of the battery 108 is smaller than the reference amount, and returns to S1020 to continue the work if not. As the reference amount, a value large enough for the work machine 1 to return to the station 3 from any position in the work region WR need only be set.

In S1050, the work unit 1 is stopped and the work is interrupted in response to the presence of the return command in S1030 or to the state in which the residual amount of the battery 108 is smaller than the reference amount in S1040. In S1060, arithmetic processing for determining the traveling route to the station 3 is performed as will be described in detail later. In step S1070, the work machine 1 returns to the station 3 along the traveling route determined in S1060, and this flowchart is terminated.

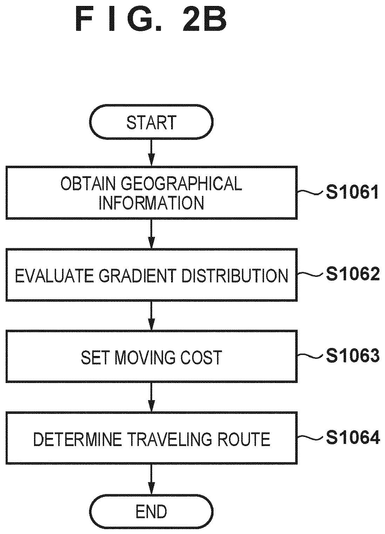

Fig. 2B is a flowchart showing the contents of the arithmetic processing in S1060. This flowchart determines the traveling route from the position (current position) of the work machine 1 to the charging station 3 (the destination) when there is a return command (S1030) or when the residual amount of the battery 108 is smaller than the reference amount (S1040).

First, geographical information of the work region WR is obtained in S1061. This geographical information is held in the information holding unit 107 in advance as described earlier, and already read out in S1010. In this embodiment, therefore, the arithmetic unit 106 uses the geographical information read out in S1010.

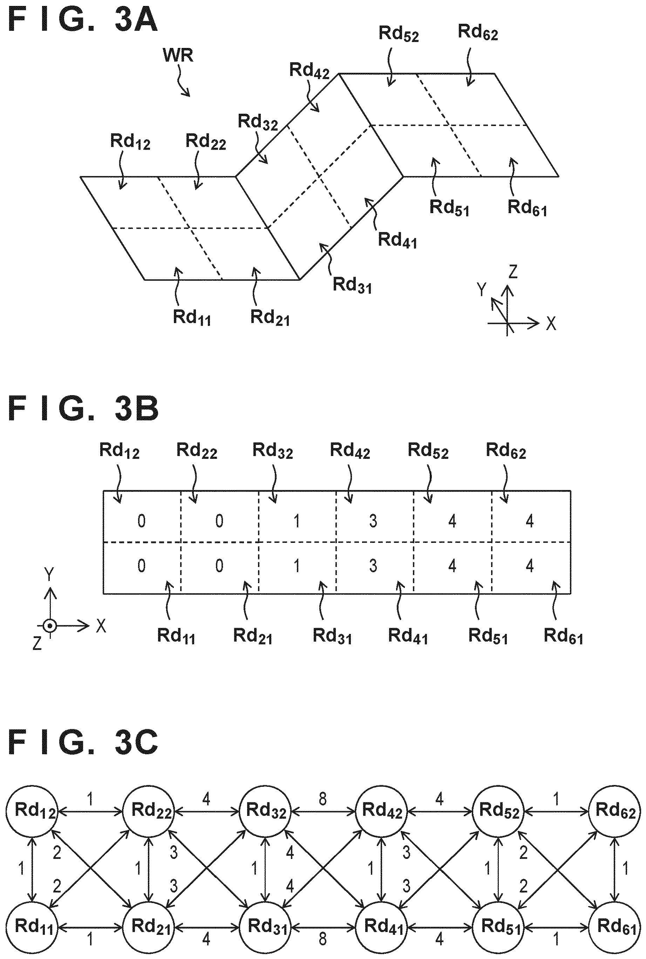

Fig. 3A is a schematic view for explaining the geographical information of the work region WR. To simplify the explanation, Fig. 3A shows X, Y, and Z directions, the X and Y directions are horizontal directions perpendicular to each other, and the Z direction is a vertical direction perpendicular to both the X and Y directions. The work region WR is virtually divided into a plurality of regions. To facilitate understanding, it is assumed that the work region is divided into 6 squares in the X direction and 2 squares in the Y direction, that is, a total of 12 squares, so that each divided region is a square. Each of these divided regions will sometimes be expressed as a "divided region" hereinafter. Of these divided regions, for example, a divided region that is the ith in the X direction and the jth in the Y direction is a divided region $Rd_{ij}$, and a divided region that is the 5th in the X direction and the 2nd in the Y direction is a divided region $Rd_{52}$.

In this example, divided regions $Rd_{11}$, $Rd_{21}$, $Rd_{12}$, and $Rd_{22}$ form a horizontal plane (a flat plane parallel to both the X and Y directions). Also, divided regions $Rd_{51}$, $Rd_{61}$, $Rd_{52}$, and $Rd_{62}$ form a horizontal plane at a position (a position in a +Z direction) higher than the divided regions $Rd_{11}$, $Rd_{21}$, $Rd_{12}$, and $Rd_{22}$. In addition, divided regions $Rd_{31}$, $Rd_{41}$, $Rd_{32}$, and $Rd_{42}$ form an inclined plane that inclines so as to connect the divided regions $Rd_{11}$, $Rd_{21}$, $Rd_{12}$, and $Rd_{22}$ and the divided regions $Rd_{51}$, $Rd_{61}$, $Rd_{52}$, and $Rd_{62}$. Note that "inclination" herein mentioned is a form that is neither horizontal nor vertical, that is, a form that intersects one or both of the X and Y directions and intersects the Z direction.

In S1062, the gradient distribution of the work region WR is evaluated. This evaluation is performed based on the abovementioned geographical information, thereby evaluating the form of gradient (the presence/absence of, for example, an undulation, a projection or a recess, or a height difference, and its degree).

Fig. 3B shows the evaluation result indicating the gradient distribution based on the geographical information (see Fig. 3A) of the work region WR. Referring to Fig. 3B, altitude information is given to each of the divided regions Rdn to $Rd_{62}$. For example, assuming that Z-direction position information of the divided regions $Rd_{11}$, $Rd_{21}$, $Rd_{12}$, and $Rd_{22}$ is the reference (Z = 0), Z-direction position information of the divided regions $Rd_{31}$ and $Rd_{32}$ in a position relatively higher than those divided regions is given, for example, Z = 1. Similarly, Z-direction position information of the divided regions $Rd_{41}$ and $Rd_{42}$ is given, for example, Z = 3. Also, Z-direction position information of the divided regions $Rd_{51}$, $Rd_{61}$, $Rd_{52}$, and $Rd_{62}$ is given, for example, Z = 4. The gradient distribution of the divided regions $Rd_{11}$ to $Rd_{62}$ can be

evaluated in this manner.

After that, in S 1063, the moving cost from the divided region $Rd_{11}$ to the divided region $Rd_{62}$ is set based on the evaluation result in S1062. This moving cost need only be set for adjacent ones of the divided regions $Rd_{11}$ to $Rd_{62}$ based on the height difference (Z-direction position information) between them, and can correspond to the occurrence probability of an unexpected event that can occur during movement from one divided region to the other. For example, if the inclination angle of the traveling surface of the work machine 1 increases, the possibility that the work machine 1 slips and the work region WR (the lawn) causes peeling or the like accordingly increases. Therefore, the moving cost for movement when the work machine 1 travels on a surface having a large inclination angle is preferably set higher.

Fig. 3C shows an example of the setting of the moving costs from the divided region $Rd_{11}$ to the divided region $Rd_{62}$. For example, the moving cost from the divided region $Rd_{11}$ to the divided region $Rd_{21}$ is set at "1". This cost is set for convenience as a cost equivalent to the moving distance of one square in the X direction when there is no height difference between the divided regions $Rd_{11}$ and $Rd_{21}$. Also, the moving cost from the divided region $Rd_{11}$ to the divided region $Rd_{22}$ is set at "2". This cost is set for convenience as a cost equivalent to the moving distance of one square in a diagonal direction (in both the X and Y directions) when there is no height difference between the divided regions $Rd_{11}$ and $Rd_{22}$.

In this case, the moving cost from the divided region $Rd_{21}$ to the divided region $Rd_{31}$ is set at, for example, "4". Since there is a height difference between the divided regions $Rd_{21}$ and $Rd_{31}$, this cost is set for convenience based on both a cost equivalent to the moving distance of one square in the X direction, and a cost equivalent to an inclination produced by the height difference.

On the other hand, the moving cost from the divided region $Rd_{21}$ to the divided region $Rd_{32}$ is set at, for example, "3". Although there is a height difference between the divided regions $Rd_{21}$ and $Rd_{32}$, the inclination is gentler than that between the divided regions $Rd_{21}$ and $Rd_{31}$. Therefore, this cost is set for convenience based on both a cost equivalent to the moving distance of one square in the diagonal direction, and a cost equivalent to the gentler inclination. That is, the moving cost from the divided region $Rd_{21}$ to the divided region $Rd_{32}$ is set to have a value smaller than that of the moving cost from the divided region $R_{21}$ to the divided region $Rd_{31}$.

Similarly, the moving cost from the divided region $Rd_{31}$ to the divided region $Rd_{41}$ is set at, for example, "8". Since there is a height difference between the divided regions $Rd_{31}$ and $Rd_{41}$, this cost is set for convenience based on both a cost equivalent to the moving distance of one square in the X direction, and a cost equivalent to an inclination produced by the height difference. Since the height difference between the divided regions $Rd_{31}$ and $Rd_{41}$ is larger than that between the divided regions $Rd_{21}$ and $Rd_{31}$, the moving cost from the divided region $Rd_{31}$ to the divided region $Rd_{41}$ is set to have a value larger than that of the moving cost from the divided region $R_{21}$ to the divided region $Rd_{31}$.

On the other hand, the moving cost from the divided region $Rd_{31}$ to the divided region $Rd_{42}$ is set at, for example, "4". Although there is a height difference between the divided regions $Rd_{31}$ and $Rd_{42}$, the inclination is gentler than that between the divided regions $Rd_{31}$ and $Rd_{41}$. Therefore, this cost is set for convenience based on both a cost equivalent to the moving distance of one square in the diagonal direction, and a cost equivalent to the gentler inclination. That is, the moving cost from the divided region $Rd_{31}$ to the divided region $Rd_{42}$ is set to have a value smaller than that of the moving cost from the divided region $R_{31}$ to the divided region $Rd_{41}$.

As will be described in detail later, the moving cost between divided regions is mainly set based on the degree of an inclination produced by the height difference between the divided regions as described above. Note that in the example shown in Fig. 3C, the moving costs between divided regions adjacent to each other are determined to have the same value regardless of directions. For example, the moving cost from the divided region $Rd_{31}$ to the divided region $Rd_{42}$ is set at "4" as described above, and the moving cost from the divided region $Rd_{42}$ to the divided region $Rd_{31}$ is also set at "4".

Finally, in S1064, the traveling route is determined based on the moving costs set in S1063. In this embodiment, the traveling route from the divided region $Rd_{11}$ as the current position to the divided region $Rd_{62}$ as the destination is determined. This traveling route need only be set such that the moving costs between the divided regions where the work machine 1 travels from the divided region $Rd_{11}$ to the divided region $Rd_{62}$ satisfy a predetermined condition. For example, the traveling route can be so determined that the sum of the moving costs of the traveling route is smaller than a reference value or takes a minimum value, or any of the moving costs between divided regions does not exceed a reference value.

A case in which a traveling route that minimizes the sum of the moving costs in the example shown in Fig. 3C is determined will be explained below. In the example shown in Fig. 3C, possible candidates of the traveling route are:

| | |
|---|---|
| (Route A) | Rdn -> $Rd_{21} \rightarrow Rd_{31} \rightarrow Rd_{41} \rightarrow Rd_{51} \rightarrow Rd_{62}$ |
| (Route B) | $Rd_{11} \rightarrow Rd_{21} \rightarrow Rd_{31} \rightarrow Rd_{42} \rightarrow Rd_{52} \rightarrow Rd_{62}$ |
| (Route C) | $Rd_{11} \rightarrow Rd_{21} \rightarrow Rd_{32} \rightarrow Rd_{41} \rightarrow Rd_{52} \rightarrow Rd_{62}$ |

In this case, the sum of the moving costs of the route A is 19, and the sum of the moving costs of the route B is 14. On the other hand, the sum of the moving costs of the route C is 12, that is, smaller than the sums of the moving costs of the routes A and B. In addition, even when the moving costs of other routes are taken into consideration, there is no route having the sum of the moving costs smaller than that of the route C. In the example shown in Fig. 3C, therefore, the route C is selected and determined as the traveling route from the divided region $Rd_{11}$ (the current position) to the divided region $Rd_{62}$ (the destination).

To simplify the explanation, the contents of the arithmetic processing shown in Fig. 2B have been explained by using the models shown in Figs. 3A to 3C for convenience. Since, however, the work region WR can have a wide area and complicated undulations, the actual arithmetic processing by the arithmetic unit 106 can become complicated. Therefore, a predetermined simplified model can be used in the arithmetic processing of the arithmetic unit 106. For example, the gradient distribution of the work region WR can be evaluated relatively simply by giving coordinate information to each divided region (for example, $Rd_{11}$) based on the geographical information of the work region WR, and then setting the moving cost based on these pieces of coordinate information.

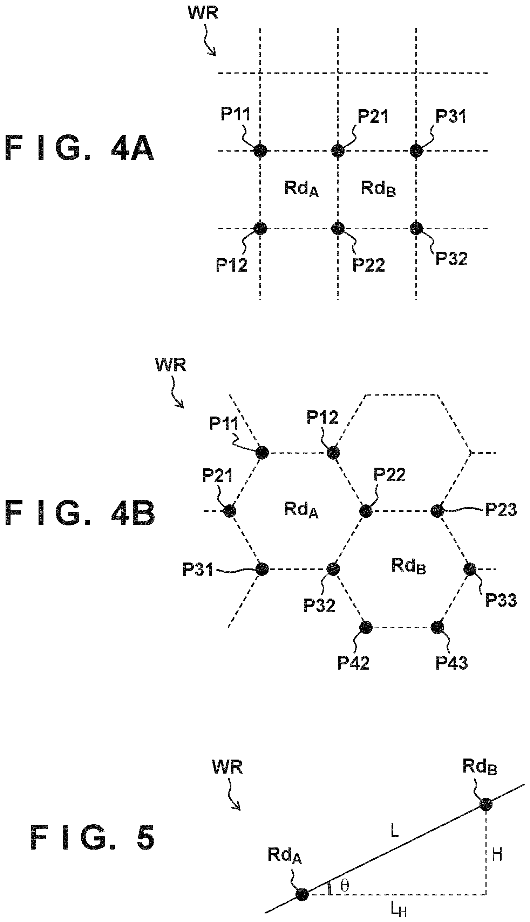

Fig. 4A is a schematic view for explaining the coordinate information of divided regions (for example, divided regions $Rd_A$ and $Rd_B$). The arithmetic unit 106 virtually divides the work region WR into a plurality of regions. In this example, the arithmetic unit 106 divides the work region WR such that each divided region is a square, and gives each individual divided region the coordinate information based on the coordinates of the corners. For example, the arithmetic unit 106 gives a given divided region the average value of the corner coordinates as the coordinate information.

For example, the divided region $Rd_A$ has points $P_{11}$, $P_{21}$, $P_{12}$, and $P_{22}$ as the corners. In the (X, Y, Z) coordinate system, the points $P_{11}$, $P_{21}$, $P_{12}$, and $P_{22}$ can be represented by:

$$P_{11} = (X_{11}, Y_{11}, Z_{11})$$

$$P_{21} = (X_{21}, Y_{21}, Z_{21})$$

$$P_{12} = (X_{12}, Y_{12}, Z_{12})$$

$$P_{22} = (X_{22}, Y_{22}, Z_{22})$$

In this case, the divided region $Rd_A$ is given information of coordinates $(X_A, Y_A, Z_A)$ that satisfy the following equations:

$$X_A = (X_{11} + X_{21} + X_{12} + X_{22})/4$$

$$Y_A = (Y_{11} + Y_{21} + Y_{12} + Y_{22})/4$$

$$Z_A = (Z_{11} + Z_{21} + Z_{12} + Z_{22})/4$$

Likewise, the divided region $Rd_B$ has points $P_{21}$, $P_{31}$, $P_{22}$, and $P_{32}$ as the corners. In the (X, Y, Z) coordinate system, the points $P_{31}$ and $P_{32}$ can be represented by:

$$P_{31} = (X_{31}, Y_{31}, Z_{31})$$

$$P_{32} = (X_{32}, Y_{32}, Z_{32})$$

In this case, the divided region $Rd_B$ is given information of coordinates $(X_B, Y_B, Z_B)$ that satisfy the following equations:

$$X_B = (X_{21} + X_{31} + X_{22} + X_{32})/4$$

$$Y_B = (Y_{21} + Y_{31} + Y_{22} + Y_{32})/4$$

$$Z_B = (Z_{21} + Z_{31} + Z_{22} + Z_{32})/4$$

Note that in this example shown in Fig. 4A, the work region WR is divided so that each divided region is a square. However, the shape of the divided region is not limited to this, so the work region WR can be divided into various forms.

For example, as shown in Fig. 4B, the work region WR can also be divided such that each divided region is a hexagon. Even in this case, the coordinate information of each divided region is given based on the coordinates of the corners. For example, the coordinate information of a divided region $Rd_A$ shown in Fig. 4B is given by the average value of the coordinates of points $P_{11}$, $P_{12}$, $P_{21}$, $P_{22}$, $P_{31}$, and $P_{32}$ as the corners. Also, the coordinate information of a divided region $Rd_B$ is given by the average value of the coordinates of points $P_{22}$, $P_{23}$, $P_{32}$, $P_{33}$, $P_{42}$, and $P_{43}$ as the corners.

Note that the coordinate information to be given to each divided region need only be based on the coordinates of the corners, and is the average value of the coordinates in this embodiment. As another embodiment, however, the coordinate information may also be the median of the coordinates, and it is also possible to alternatively/incidentally use an arithmetic value taking account of a standard deviation or the like.

Note also that the arithmetic unit 106 virtually divides the work region WR into a plurality of regions in this embodiment, but the dividing form may also be predetermined in accordance with a predetermined rule. In this case, the geographical information of the work region WR can contain information for specifying the rule as attribute information. Alternatively, the geographical information of the work region WR may also contain, as attribute information, the coordinate information to be assigned to each divided region.

After the coordinate information is given to each divided region as described above, the moving cost between divided regions is set based on the coordinate information. As described above with reference to Figs. 3B and 3C, the moving cost is mainly set based on the degree of an inclination produced by the height difference between the divided regions. Incidentally, the moving cost may also be set based on the height difference itself.

Fig. 5 is a schematic view for explaining an example of a method of setting the moving cost between divided regions $Rd_A$ and $Rd_B$. The $Rd_A$ - $Rd_B$ moving cost is set based on coordinate information given to the divided region $Rd_A$ and coordinate information given to the divided region $Rd_B$. Assume that the divided region $Rd_A$ is given the abovementioned coordinates $(X_A, Y_A, Z_A)$ and the divided region $Rd_B$ is given the abovementioned coordinates $(X_B, Y_B, Z_B)$. In Fig. 5, a distance L indicates the distance between the coordinates $(X_A, Y_A, Z_A)$ and the coordinates $(X_B, Y_B, Z_B)$, a distance $L_H$ indicates the distance in the horizontal direction between the divided regions $Rd_A$ and $Rd_B$, and a distance H indicates the height difference between the divided regions $Rd_A$ and $Rd_B$. That is, the distances L, $L_H$, and H can be represented by:

$$L = \{(X_A - X_B)^2 + (Y_A - Y_B)^2 + (Z_A - Z_B)^2\}^{1/2}$$

$$L_H = \{(X_A - X_B)^2 + (Y_A - Y_B)^2\}^{1/2}$$

$$H = |Z_A - Z_B|$$

Also, an inclination angle $\theta$ between the divided regions $Rd_A$ and $Rd_B$ can be represented by:

$$\theta = \arcsin(H/L)$$

The moving cost (a moving cost $C_{AB}$) when the work machine 1 moves from the divided region $Rd_A$ to the divided region $Rd_B$ can be evaluated by using various simple models, and is generated as an evaluation value by using, for example, the inclination angle $\theta$ ($0° \leq \theta < 90°$).

As the first example of the method of setting the moving cost $C_{AB}$, the moving cost $C_{AB}$ can be set as:

$$C_{AB} = K_0 \times \sin\theta$$

$K_0$: coefficient ($K_0 > 0$)

by assuming that the moving cost when the work machine 1 travels on a horizontal surface is extremely small. In this example, when the region between the divided regions $Rd_A$ and $Rd_B$ is horizontal ($\theta = 0°$), the moving cost $C_{AB}$ is set as:

$$C_{AB} = 0$$

In addition, the moving cost $C_{AB}$ increases as the inclination angle $\theta$ increases ($C_{AB} \rightarrow K_0$ for $\theta \rightarrow 90°$).

As the second example, the moving cost $C_{AB}$ can also be set such that it has a predetermined value when the work machine 1 travels on a horizontal surface and increases as the inclination angle $\theta$ increases. For example, the moving cost $C_{AB}$ can also be set as:

$$C_{AB} = K_1 \times L/\cos\theta$$

$K_1$: coefficient ($K_1 > 0$)

In this example, when the region between the divided regions $Rd_A$ and $Rd_B$ is horizontal ($\theta = 0°$), the moving cost $C_{AB}$ is set as:

$$C_{AB} = K_1 \times L$$

In addition, the moving cost $C_{AB}$ increases as the inclination angle $\theta$ increases ($C_{AB} \rightarrow \infty$ for $\theta \rightarrow 90°$).

As the third example, the moving cost $C_{AB}$ can also be set as:

$$C_{AB} = L \times (K_2 + K_3 \times \sin\theta)$$

$K_2$: coefficient ($K_2 \geq 0$)
$K_3$: coefficient ($K_3 \geq 0$)

by the same purpose as that of the second example. In this example, when the region between the divided regions $Rd_A$ and $Rd_B$ is horizontal ($\theta = 0°$), the moving cost $C_{AB}$ is set as:

$$C_{AB} = L \times K_2$$

In addition, the moving cost $C_{AB}$ increases as the inclination angle $\theta$ increases ($C_{AB} \rightarrow L \times (K_2 + K_3)$ for $\theta \rightarrow 90°$). Note that a moving cost giving importance to the degree of an inclination can be set by setting $K_3 > K_2$.

The three setting methods of the first to third examples have been explained above, but the moving cost $C_{AB}$ can also be set by combining these setting methods, or another function corresponding to a simplified model can also be combined. For example, the above-described moving cost can also be set by using the height difference H, or the height difference H and the distance $L_H$, without using the inclination angle $\theta$. This can reduce the processing load on the arithmetic unit 106. Alternatively, coordinate information to be assigned to each divided region can further contain information indicating the degree of the inclination of the divided region itself, and the above-described divided region can also be set by incidentally referring to this information.

In the example shown in Fig. 3C described above, the moving costs between divided regions are set to have the same value regardless of directions. However, it is also possible to individually set the moving cost in one direction and the moving cost in another direction by using, for example, different equations or different coefficients. That is, the moving cost $C_{AB}$ when the work machine 1 moves from the divided region $Rd_A$ to the divided region $Rd_B$ and the moving cost $C_{BA}$ when the work machine 1 moves from the divided region $Rd_B$ to the divided region $Rd_A$ can have different values.

The reason is that in movement between divided regions having a height difference, the ease with which the above-described unexpected event (for example, slippage) occurs in upward movement often differs from that in downward movement. In many cases, slippage or the like of the work machine 1 occurs more easily when it moves down on an inclined surface than when it moves up on the inclined surface. Accordingly, in the example shown in Fig. 5 described above (when $Z_A < Z_B$), the moving costs $C_{AB}$ and $C_{BA}$ can be set as:

$$C_{AB} < C_{BA}$$

After the moving costs between divided regions are set as described above, the traveling route from the current position to the destination is determined based on the set moving costs. In the example shown in Fig. 3C described above, the traveling route is so determined as to minimize the sum of the moving costs between divided regions forming the traveling route. In this case, the sum of the moving costs when the work machine 1 moves along the traveling route from the current position to the destination can be calculated by cumulatively adding the moving costs between divided regions. This makes it possible to appropriately determine a traveling route that can avoid unnecessary traveling.

The form in which the traveling route is determined based on the abovementioned set moving costs between divided regions has been explained above, but this determination may also be performed by incidentally referring to another element. For example, the occurrence probability of an unexpected event (for example, peeling of the lawn) that can occur when the work machine 1 travels on an inclined surface can also vary due to the surrounding environment of the work machine 1. Accordingly, the traveling route may also be determined further based on environmental information of the surroundings of the work machine 1.

Examples of the environmental information are the humidity, the temperature, and the atmospheric pressure. Information of the humidity, temperature, atmospheric pressure, and the like can be obtained by, for example, various sensors of the measurement unit 105. If the humidity, temperature, atmospheric pressure, or the like varies, the coefficient of friction between the traveling unit 103 and the traveling surface can also vary, and this can affect the occurrence probability of the abovementioned unexpected event. For example, slippage easily occurs when the work machine 1 travels on an inclined surface at a high humidity. Accordingly, the traveling route may also be determined by taking this into consideration.

The occurrence probability of the unexpected event generally depends on the weather as well, so another example of the abovementioned environmental information is weather information. For example, the weather information can be obtained across the network N. The concept of this weather information includes information of the weather in a relatively near future, in addition to information indicating the current weather. For example, if it is predicted that it will rain in a relatively near future, the traveling route may also be determined by taking this into account.

The environmental information like this can also be used in S1063, that is, can be used to adjust a numerical value such as the coefficient $K_0$ of an equation for setting the moving cost. For example, the numerical value of the coefficient $K_0$ or the like can be changed such that when the humidity is relatively high, the moving cost $C_{AB}$ further increases (more than that when the humidity is relatively low) as the inclination angle $\theta$ increases.

Alternatively, the allowable range of undulations that the work machine 1 can pass can be set based on this environmental information. That is, this allowable range is applicable to restrict some traveling routes in S1064. For example, the arithmetic unit 106 can determine the traveling route in S 1064 so that the work machine 1 does not move between divided regions having a moving cost equivalent to or larger than the allowable range. Consequently, if the degree of an inclination in a part of a given traveling route does not satisfy the allowable range (even when the sum of the moving costs of the traveling route is minimum), the arithmetic unit 106 does not select this traveling route and selects another traveling route.

It is not always necessary to evenly divide the work region WR into a plurality of regions as shown in Figs. 4A and 4B, and the division form can partially be changed. A change example of the division form is to change, for example, the division density (the number of divided regions per unit area of the work region WR) or the division area (the area of one divided region).

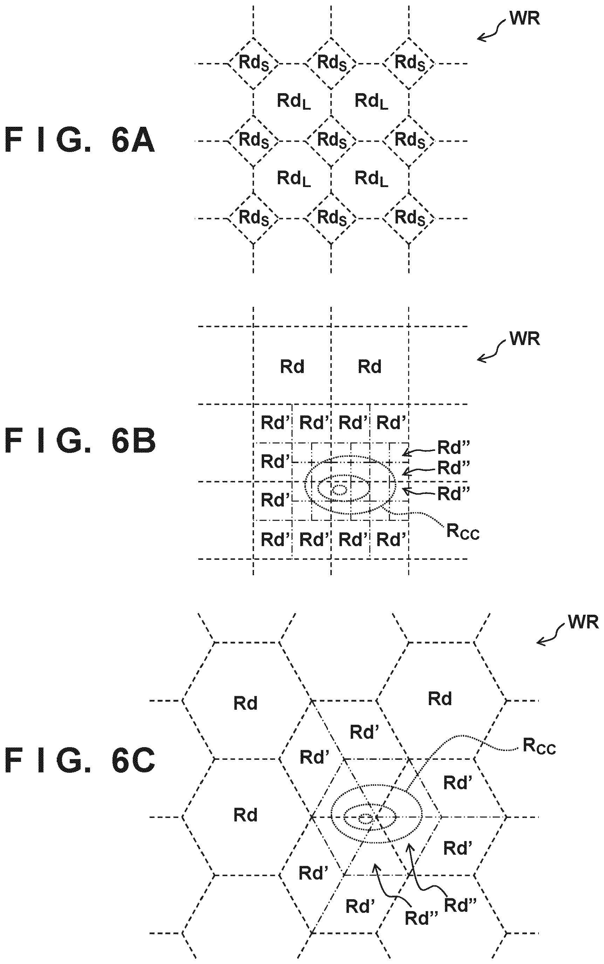

For example, as shown in Fig. 6A, the work region WR can also be divided into a plurality of divided regions $Rd_L$ and $Rd_S$ having different sizes and shapes. More specifically, the work region WR is so divided that large-sized divided regions $Rd_L$ are formed in the X and Y directions and small-sized divided regions $Rd_S$ are formed in the diagonal directions. Accordingly, the divided region $Rd_L$ has an octagonal shape, and the divided region $Rd_S$ has a square shape. In this division form, it is possible to more accurately evaluate the moving costs in the diagonal directions, and more appropriately determine the traveling route of the work machine 1 in S1060.

As another example, as shown in Fig. 6B, the division form may also be changed such that divided regions in a portion including undulations are made smaller than other divided regions. For example, of divided regions Rd divided into a square shape based on the example shown in Fig. 4A, those including a mountain-like or projecting region Rec are divided into a small size (divided regions Rd') as indicated by the alternate long and short dashed lines in Fig. 6B. Of the divided regions Rd', those including the region Rec are further divided into a smaller size (divided regions Rd") as indicated by the alternate long and two short dashed lines in Fig. 6B. This example shows the mountain-like or projecting region Rec, but the same applies to a valley-like or recessed region Rev.

In the example shown in Fig. 6B, coordinate information is given to each of the divided regions Rd, Rd', and Rd" as described previously with reference to Figs. 4A and 4B. A division form like this can further increase the accuracy of the evaluation of the moving cost in a portion having undulations, and can further appropriately determine the traveling route of the work machine 1 in S 1060. It is also possible to increase the accuracy of the evaluation of the moving cost and reduce the processing load on the arithmetic unit 106 at the same time by forming relatively wide divided regions Rd and further dividing only divided regions Rd corresponding to the region Rec or Rev.

As shown in Fig. 6C, of the divided regions Rd divided into a hexagonal shape based on the example shown in Fig. 4B, those including the region Rec (or Rcv) can be divided into small-sized divided regions Rd' or smaller-sized divided regions Rd". The same effect as that shown in Fig. 6B can be obtained by this division form as well.

The shapes of the divided regions Rd, Rd', and Rd" are not limited to these examples, so the work region WR can be divided into various shapes and various sizes. Accordingly, the divided regions Rd, Rd', and Rd" can be trapezoids, or polygons all the sides of which have different lengths. Even in these cases, coordinate information can be given to the divided regions Rd, Rd', and Rd" by the same procedures as described above (see Figs. 4A and 4B).

According to this embodiment, the arithmetic unit 106 functions as a traveling route determination device, obtains geographical information of the work region WR (see S1061 in Fig. 2), and evaluates the gradient distribution of the work region WR based on this geographical information (see S1062). The geographical information contains coordinate information of the work region WR in the horizontal and vertical directions (see Fig. 3A), and the arithmetic unit 106 can evaluate the gradient distribution by performing relatively simple arithmetic processing (see Figs. 3B and 3C). Then, based on this gradient distribution evaluation result, the arithmetic unit 106 determines the traveling route of the work machine 1 from the current position to the destination (for example, the charging station 3) in the work region WR so as to reduce undulations in the traveling route (see S 1063 and S 1064). In this embodiment, the traveling route of the work machine 1 can appropriately be determined by taking account of undulations of the work region WR.

As another embodiment, the geographical information of the work region WR can further contain various pieces of information, and the traveling route can be determined by further referring to these pieces of information. As an example, the geographical information can further contain information (projection/recess count information) indicating the number of projecting regions $R_{CC}$ or recessed regions $R_{CV}$ existing in each divided region Rd. For example, even when the moving cost between divided regions is relatively low, if the number of regions $R_{CC}$ or $R_{CV}$ existing in one or the other divided region is relatively large, the traveling route is determined so as not to pass the divided region. This is useful when the region Rec or $R_{CV}$ is relatively small. This makes it possible to avoid an event in which the wheel 1032 or 1033 is stuck in the region $R_{CC}$ or $R_{CV}$ when the work machine 1 passes, thereby preventing the occurrence of an unexpected event. Also, the divided region Rd need not be divided into small-sized divided regions Rd' or into smaller-sized divided regions Rd". This can reduce the processing load on the arithmetic unit 106.

In this embodiment, an unmanned traveling type lawn mower including the battery 108 is exemplified as the work machine 1. In this example, when the remaining amount of the battery 108 becomes smaller than the reference amount, it is possible to appropriately determine a traveling route for the work machine 1 to properly return to the charging station 3 as the destination. In this embodiment, the work machine 1 does not pass any relatively steep inclined surface when returning from the current position to the charging station 3 as the destination. This can prevent the occurrence of unexpected events such as slippage of the work machine 1 that can occur when it passes an inclined surface, and peeling of the lawn as a result of the slippage. Also, the work machine 1 can return to the charging station 3 at a vehicle speed higher than that during work by returning along an appropriate traveling route. These features apply to an arrangement not including the battery 108 as well. That is, even in a case like this, the work machine 1 can appropriately arrive at the destination without passing any relatively steep inclined surface (without causing any unexpected event resulting from the inclined surface).

Although the arithmetic processing for determining the traveling route can be performed by the arithmetic unit 106 of the work machine 1, it can also be performed outside the work machine 1, for example, can also be performed by the information management apparatus 2. In this case, the information management apparatus 2 functions as a traveling route determination device, and the work machine 1 receives the result of the arithmetic processing from the information management apparatus 2 and travels along a traveling route based on the arithmetic processing result.

In this embodiment, the geographical information of the work region WR is held in the information holding unit 107 beforehand. As another embodiment, however, the geographical information can also be received from the information management apparatus 2. As still another embodiment, the work machine 1 itself can generate the geographical information. For example, the arithmetic unit 106 can generate geographical information based on the measurement result (image information mainly obtained by the camera 1051) of the measurement unit 105, and store the geographical information in the information holding unit 107. In this case, before starting the first work in the work region WR, the work machine 1 obtains geographical information by traveling in the work region WR. This geographical information can be used when actually performing the first work. Also, this geographical information can be read out from the information holding unit 107 when performing the second and subsequent works.

**Claims**

1. A traveling route determination apparatus for determining a traveling route of a work machine (1) in a work region (WR), **characterized by** comprising:

   obtaining means (S1062) for obtaining geographical information of the work region (WR);
   evaluating means (S 1062, S1063) for evaluating a height difference of the work region based on the geographical information; and
   determining means (S1064) for determining a traveling route of the work machine (1) from a current position to a destination (3) in the work region (WR) based on the height differences, wherein
   the geographical information contains coordinate information given to each of a plurality of regions obtained by virtually dividing the work region (WR),
   the evaluating means (S1062,S1063) evaluates a moving cost ($C_{BA}$) when the work machine (1) moves between two adjacent regions of the plurality of regions, based on an inclination angle between the two adjacent regions obtained from the coordinate information, the determining means (S1064) determines a traveling route from the current position to the destination (3), by calculating a sum of the moving costs ($C_{BA}$) for each route passing some of the plurality of regions from the current position to the destination (3), and by selecting one route whose sum of the moving costs ($C_{BA}$) is minimized, based on the calculation result, and
   a region having an undulation, among the plurality of regions, is virtually divided into a smaller-sized one than the others.

2. The traveling route determination apparatus according to claim 1, **characterized in that** the geographical information contains coordinate information of the work region (WR) in a horizontal direction and a vertical direction.

3. The traveling route determination apparatus according to claim 1 or 2, **characterized in that** the moving cost ($C_{BA}$) increases when a height difference between the two adjacent regions becomes larger.

4. The traveling route determination apparatus according to any one of claims 1 to 3, **characterized in that** the moving cost ($C_{BA}$) increases when a distance between the two adjacent regions becomes longer.

5. The traveling route determination apparatus according any one of claims 1 to 4, **characterized in that**

   the plurality of divided regions include a first region ($Rd_A$) and a second region ($Rd_B$) given the coordinate information indicating that the first region ($Rd_A$) and the second region ($Rd_B$) are adjacent to each other and have different heights, and
   the evaluating means (S1062, S1063) individually evaluates the moving cost when the work machine (1) moves from the first region ($Rd_A$) to the second region ($Rd_B$), and the moving cost ($C_{BA}$) when the work machine (1) moves from the second region ($Rd_B$) to the first region ($Rd_A$).

6. The traveling route determination apparatus according to any one of claims 1 to 5, **characterized in that**

   the geographical information further contains projection/recess count information indicating the number of projections or recesses existing in each of the plurality of divided regions, and
   the determining means (S1064) determines the traveling route further based on the projection/recess count information.

7. The traveling route determination apparatus according to any one of claims 1 to 6, **characterized by** further comprising second obtaining means (S1062) for obtaining environmental information of surroundings of the work machine (1),
   wherein the determining means (S1064) determines the traveling route further based on the environmental information.

8. The traveling route determination apparatus according to claim 7, **characterized in that** the environmental information contains information indicating humidity.

9. The traveling route determination apparatus according to claim 7 or 8, **characterized in that** the environmental information contains weather information.

**10.** The traveling route determination apparatus according to any one of claims 1 to 9, **characterized in that**, for some of the plurality of divided regions, a division density and/or a division area is different.

**11.** A work machine (1) **characterized by** comprising a traveling route determination apparatus cited in any one of claims 1 to 10, a traveling unit (103) configured to cause a vehicle to travel, and a traveling controller (104) configured to control the traveling unit (103) based on the traveling route determined by the determining means (S1064) of the traveling route determination apparatus.

**12.** The work machine (1) according to claim 11, **characterized by** further comprising a measurement unit (105) configured to measure a geographical feature of the work region (WR), and an information holding unit (107) configured to hold a measurement result obtained by the measurement unit (105) as the geographical information.

**13.** The work machine (1) according to claim 11 or 12, **characterized by** further comprising a battery (108), wherein when a residual amount of the battery (108) becomes smaller than a reference amount, the traveling route determination apparatus determines the traveling route by the determining means (S1064) by setting a charging station (3) as the destination.

**Patentansprüche**

**1.** Fahrwegbestimmungsvorrichtung zum Bestimmen eines Fahrweges einer Arbeitsmaschine (1) in einem Arbeitsbereich (WR), **dadurch gekennzeichnet, dass** sie umfasst:

Gewinnungsmittel (S1062) zur Gewinnung geografischer Informationen über den Arbeitsbereich (WR);
Auswertemittel (S1062, S1063) zum Auswerten eines Höhenunterschieds des Arbeitsbereichs auf der Grundlage der geografischen Informationen; und
Bestimmungsmittel (S1064) zum Bestimmen eines Fahrtrwegs der Arbeitsmaschine (1) von einer aktuellen Position zu einem Ziel (3) im Arbeitsbereich (WR) basierend auf den Höhenunterschieden, wobei
die geografischen Informationen Koordinateninformationen enthalten, die jeder einer Vielzahl von Regionen zugeordnet sind, die durch virtuelle Unterteilung der Arbeitsregion (WR) erhalten werden,
die Auswerteittel (S1062, S1063) Bewegungskosten ($C_{BA}$) auswerten, wenn sich die Arbeitsmaschine (1) zwischen zwei benachbarten Regionen der Vielzahl von Regionen bewegt, basierend auf einem Neigungswinkel zwischen den zwei benachbarten Regionen, der aus der Koordinateninformation erhalten wird, die Bestimmungsmittel (S1064) einen Fahrtweg von der aktuellen Position zu dem Ziel (3) bestimmen, durch Berechnen einer Summe der Bewegungskosten ($C_{BA}$) für jeden Weg, der einige der Vielzahl von Regionen von der aktuellen Position zum Ziel (3) passiert, und durch Auswählen eines Wegs, dessen Summe der Bewegungskosten ($C_{BA}$) minimiert ist, basierend auf dem Berechnungsergebnis, und
eine Region mit einer Welligkeit unter der Vielzahl von Regionen praktisch in eine kleinere Region als die anderen unterteilt ist.

**2.** Fahrwegbestimmungsvorrichtung nach Anspruch 1, **dadurch gekennzeichnet, dass** die geografischen Informationen Koordinateninformationen des Arbeitsbereichs (WR) in einer horizontalen Richtung und einer vertikalen Richtung enthalten.

**3.** Fahrwegbestimmungsvorrichtung nach Anspruch 1 oder 2, **dadurch gekennzeichnet, dass** die Bewegungskosten ($C_{BA}$) zunehmen, wenn ein Höhenunterschied zwischen den beiden benachbarten Bereichen größer wird.

**4.** Fahrwegbestimmungsvorrichtung nach einem der Ansprüche 1 bis 3, **dadurch gekennzeichnet, dass** die Bewegungskosten ($C_{BA}$) zunehmen, wenn der Abstand zwischen zwei benachbarten Regionen größer wird.

**5.** Fahrwegbestimmungsvorrichtung nach einem der Ansprüche 1 bis 4, **dadurch gekennzeichnet, dass**

die mehreren geteilten Bereiche einen ersten Bereich ($Rd_A$) und einen zweiten Bereich ($Rd_B$) umfassen, wobei
die Koordinateninformation angibt, dass der erste Bereich ($Rd_A$) und der zweite Bereich ($Rd_B$) aneinander angrenzen und unterschiedliche Höhen haben, und
die Auswertemittel (S1062, S1063) individuell die Bewegungskosten auswertet, wenn sich die Arbeitsmaschine (1) von dem ersten Bereich ($Rd_A$) zu dem zweiten Bereich ($Rd_B$) bewegt, und die Bewegungskosten ($C_{BA}$), wenn sich die Arbeitsmaschine (1) von dem zweiten Bereich ($Rd_B$) zu dem ersten Bereich ($Rd_A$) bewegt.

**6.** Fahrwegbestimmungsvorrichtung nach einem der Ansprüche 1 bis 5, **dadurch gekennzeichnet, dass**

die geografischen Informationen ferner Informationen über die Anzahl der Erhöhungen bzw. Vertiefungen enthalten, die die Anzahl der Erhöhungen oder Vertiefungen angeben, die in jeder der mehreren unterteilten Regionen vorhanden sind, und
die Bestimmungsmittel (S1064) den Fahrweg weiterhin auf der Grundlage der Erhöhungs-/Vertiefungsanzahlinformationen bestimmen.

**7.** Fahrwegbestimmungsvorrichtung nach einem der Ansprüche 1 bis 6, **dadurch gekennzeichnet, dass** sie ferner eine zweite Gewinnungsmittel zur Gewinnung (S1062) von Umgebungsinformationen der Umgebung der Arbeitsmaschine (1) umfasst,
wobei die Bestimmungsmittel (S1064) den Fahrtweg weiterhin auf der Grundlage der Umgebungsinformationen bestimmt.

**8.** Fahrwegbestimmungsvorrichtung nach Anspruch 7, **dadurch gekennzeichnet, dass** die Umgebungsinformationen Informationen über die Feuchtigkeit enthalten.

**9.** Fahrwegbestimmungsvorrichtung nach Anspruch 7 oder 8, **dadurch gekennzeichnet, dass** die Umgebungsinformationen Wetterinformationen enthalten.

**10.** Fahrwegbestimmungsvorrichtung nach einem der Ansprüche 1 bis 9, **dadurch gekennzeichnet, dass** für einige der mehreren unterteilten Bereiche eine Unterteilungsdichte und/oder ein Unterteilungsbereich unterschiedlich ist.

**11.** Arbeitsmaschine (1), **dadurch gekennzeichnet, dass** sie eine in einem der Ansprüche 1 bis 10 genannte Fahrtwegbestimmungsvorrichtung, eine Fahreinheit (103), die so konfiguriert ist, dass sie ein Fahrzeug zum Fahren veranlasst, und eine Fahrsteuerung (104) umfasst, die so konfiguriert ist, dass sie die Fahreinheit (103) auf der Grundlage der von den Bestimmungsmitteln (S1064) des Fahrwegbestimmungsvorrichtung bestimmten Fahrtwegs steuert.

**12.** Arbeitsmaschine (1) nach Anspruch 11, **dadurch gekennzeichnet, dass** sie ferner eine Messeinheit (105), die so konfiguriert ist, dass sie ein geografisches Merkmal des Arbeitsbereichs (WR) misst, und eine Informationshalteeinheit (107) umfasst, die so konfiguriert ist, dass sie ein von der Messeinheit (105) erhaltenes Messergebnis als die geografische Information hält.

**13.** Arbeitsmaschine (1) nach Anspruch 11 oder 12, **dadurch gekennzeichnet, dass** sie ferner eine Batterie (108) umfasst,
wobei, wenn eine Restmenge der Batterie (108) kleiner als eine Referenzmenge wird, die Fahrtwegbestimmungsvorrichtung den Fahrweg durch die Bestimmungsmittel (S1064) bestimmt, indem eine Ladestation (3) als das Ziel festgelegt wird.

**Revendications**

**1.** Dispositif de détermination d'itinéraire de déplacement pour déterminer un itinéraire de déplacement d'un engin de chantier (1) dans une région de chantier (WR), **caractérisé en ce qu'**il comprend :

un moyen d'obtention (S1062) pour obtenir des informations géographiques de la région de chantier (WR) ;
un moyen d'évaluation (S1062, S1063) pour évaluer une différence de hauteur de la région de chantier sur la base des informations géographiques ; et
un moyen de détermination (S1064) pour déterminer un itinéraire de déplacement de l'engin de chantier (1) d'une position actuelle à une destination (3) dans la région de chantier (WR) sur la base des différences de hauteur, dans lequel
les informations géographiques contiennent des informations de coordonnées données à chacune d'une pluralité de régions obtenues en divisant virtuellement la région de chantier (WR),
le moyen d'évaluation (S1062, S1063) évalue un coût de déplacement ($C_{BA}$) lorsque l'engin de chantier (1) se déplace entre deux régions adjacentes de la pluralité de régions, sur la base d'un angle d'inclinaison entre les deux régions adjacentes obtenu à partir des informations de coordonnées, le moyen de détermination (S1064) détermine un itinéraire de déplacement de la position actuelle à la destination (3) en calculant une somme des coûts de déplacement ($C_{BA}$) pour chaque itinéraire passant par certaines de la pluralité de régions de la position actuelle à la destination (3), et en sélectionnant un itinéraire dont la somme des coûts de déplacement ($C_{BA}$) est réduite au minimum, sur la base du résultat de calcul, et

une région ayant une ondulation, parmi la pluralité de régions, est divisée virtuellement en une plus petite que les autres.

2. Dispositif de détermination d'itinéraire de déplacement selon la revendication 1, **caractérisé en ce que** les informations géographiques contiennent des informations de coordonnées de la région de chantier (WR) dans une direction horizontale et une direction verticale.

3. Dispositif de détermination d'itinéraire de déplacement selon la revendication 1 ou 2, **caractérisé en ce que** le coût de déplacement ($C_{BA}$) augmente lorsqu'une différence de hauteur entre les deux régions adjacentes s'agrandit.

4. Dispositif de détermination d'itinéraire de déplacement selon l'une quelconque des revendications 1 à 3, **caractérisé en ce que** le coût de déplacement ($C_{BA}$) augmente lorsqu'une distance entre deux régions adjacentes s'allonge.

5. Dispositif de détermination d'itinéraire de déplacement selon l'une quelconque des revendications 1 à 4, **caractérisé en ce que**

la pluralité de régions divisées comprend une première région ($Rd_A$) et une deuxième région ($Rd_B$) étant donné les informations de coordonnées indiquant que la première région ($Rd_A$) et la deuxième région ($Rd_B$) sont adjacentes l'une à l'autre et ont différentes hauteurs, et
le moyen d'évaluation (S1062, S1063) évalue individuellement le coût de déplacement lorsque l'engin de chantier (1) se déplace de la première région ($Rda$) à la deuxième région ($Rd_B$), et le coût de déplacement ($C_{BA}$) lorsque l'engin de chantier (1) se déplace de la deuxième région ($Rd_B$) à la première région ($Rd_A$).

6. Dispositif de détermination d'itinéraire de déplacement selon l'une quelconque des revendications 1 à 5, **caractérisé en ce que**

les informations géographiques contiennent en outre des informations de comptage de saillies/évidements indiquant le nombre de saillies ou d'évidements existant dans chacune de la pluralité de régions divisées, et
le moyen de détermination (S1064) détermine l'itinéraire de déplacement en outre sur la base des informations de comptage de saillies/évidements.

7. Dispositif de détermination d'itinéraire de déplacement selon l'une quelconque des revendications 1 à 6, **caractérisé en ce qu'**il comprend en outre un deuxième moyen d'obtention (S1062) pour obtenir des informations environnementales des alentours de l'engin de chantier (1),
dans lequel le moyen de détermination (S1064) détermine l'itinéraire de déplacement en outre sur la base des informations environnementales.

8. Dispositif de détermination d'itinéraire de déplacement selon la revendication 7, **caractérisé en ce que** les informations environnementales contiennent des informations indiquant l'humidité.

9. Dispositif de détermination d'itinéraire de déplacement selon la revendication 7 ou 8, **caractérisé en ce que** les informations environnementales contiennent des informations météorologiques.

10. Dispositif de détermination d'itinéraire de déplacement selon l'une quelconque des revendications 1 à 9, **caractérisé en ce que**, pour certaines de la pluralité de régions divisées, une densité de division et/ou une zone de division sont différentes.

11. Engin de chantier (1) **caractérisé en ce qu'**il comprend un dispositif de détermination d'itinéraire de déplacement cité dans l'une quelconque des revendications 1 à 10, une unité de déplacement (103) configurée pour amener un véhicule à se déplacer, et un dispositif de commande de déplacement (104) configuré pour commander l'unité de déplacement (103) sur la base de l'itinéraire de déplacement déterminé par le moyen de détermination (S1064) du dispositif de détermination d'itinéraire de déplacement.

12. Engin de chantier (1) selon la revendication 11, **caractérisé en ce qu'**il comprend en outre une unité de mesure (105) configurée pour mesurer une caractéristique géographique de la région de chantier (WR), et une unité de conservation d'informations (107) configurée pour conserver un résultat de mesure obtenu par l'unité de mesure (105) comme informations géographiques.

13. Engin de chantier (1) selon la revendication 11 ou 12, **caractérisé en ce qu'**il comprend en outre une batterie (108), dans lequel lorsqu'une quantité résiduelle de la batterie (108) devient inférieure à une quantité de référence, le dispositif de détermination d'itinéraire de déplacement détermine l'itinéraire de déplacement par le moyen de détermination (S1064) par définition d'une station de charge (3) comme destination.

# FIG. 1A

SY

H

3

2

WR

1

$R_{CC}$

$R_{CV}$

M M M M M M M M M

# FIG. 1B

N

2

1

INFORMATION MANAGEMENT APPARATUS

WORK MACHINE

NETWORK

CPU — 21

MEMORY — 22

I/F — 23

# F I G. 1C

# F I G. 2A

```
                    ┌─────────────┐
                    │    START    │
                    └──────┬──────┘
                           │
                           ▼
                ┌──────────────────────┐
                │    INITIAL SETTING    │──── S1010
                └──────────┬───────────┘
                           │
                           ▼  ◄─────────────────────────┐
                ┌──────────────────────┐                │
                │         WORK          │──── S1020      │
                └──────────┬───────────┘                │
                           │                            │
                           ▼          S1030             │
                          ╱╲                            │
        YES             ╱    ╲                          │
     ◄──────────── ╱  WAS THERE RETURN  ╲               │
     │             ╲     COMMAND       ╱                │
     │               ╲      ?        ╱                  │
     │                 ╲    ╱                           │
     │                   ╲╱                             │
     │                   │ NO                           │
     │                   ▼         S1040                │
     │                  ╱╲                              │
     │                ╱    ╲              NO            │
     │           ╱  IS REMAINING  ╲ ────────────────────┘
     │           ╲ BATTERY LEVEL LOW ╱
     │             ╲      ?        ╱
     │               ╲    ╱
     │                 ╲╱
     │                 │ YES
     └────────────────►│
                       ▼
            ┌──────────────────────┐
            │    INTERRUPT WORK     │──── S1050
            └──────────┬───────────┘
                       │
                       ▼
            ┌──────────────────────┐
            ││   ARITHMETIC         │──── S1060
            ││   PROCESSING         │
            └──────────┬───────────┘
                       │
                       ▼
            ┌──────────────────────┐
            │    EXECUTE RETURN     │──── S1070
            └──────────┬───────────┘
                       │
                       ▼
                ┌─────────────┐
                │     END     │
                └─────────────┘
```

# F I G. 2B

START

OBTAIN GEOGRAPHICAL INFORMATION — S1061

EVALUATE GRADIENT DISTRIBUTION — S1062

SET MOVING COST — S1063

DETERMINE TRAVELING ROUTE — S1064

END

# F I G. 3A

# F I G. 3B

# F I G. 3C

WR

P11    P21    P31

F I G. 4A

RdA    RdB

P12    P22    P32

WR

P11    P12

P21    RdA    P22    P23

F I G. 4B

P31    P32    RdB    P33

P42    P43

WR    RdB

F I G. 5    L    H

RdA    θ    LH

F I G. 6A

F I G. 6B

F I G. 6C

**EP 3 855 271 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9128043 A
- JP 2016028311 A
- EP 3238523 A1
- EP 1406140 A2